# EUROPEAN PATENT APPLICATION

(11) **EP 2 874 357 A1**
(43) Date of publication of application: **20.05.2015**
(21) Application number: 13816233.4
(22) Date of filing: 12.07.2013
(51) Int. Cl.: H04L 12/717

(54) **SWITCH, COMMUNICATION SYSTEM, SWITCH CONTROL METHOD, AND PROGRAM**

(30) Priority: 13.07.2012 JP 2012157263
(71) Applicant: NEC Corporation, Tokyo 108-8001 (JP)
(72) Inventor: SASAKI, Takayuki, Tokyo 108-8001 (JP); NAKAE, Masayuki, Tokyo 108-8001 (JP); SHIMONISHI, Hideyuki, Tokyo 108-8001 (JP); SONODA, Kentaro, Tokyo 108-8001 (JP); HATANO, Yoichi, Tokyo 108-8001 (JP); YAMAGATA, Masaya, Tokyo 108-8001 (JP); MORITA, Yoichiro, Tokyo 108-8001 (JP)
(74) Representative: Betten & Resch
(86) International application number: PCT/JP2013/069129
(87) International publication number: WO 2014/010723

(57) **Abstract**

To control transmission of a control information transmission request from a switch to a control device. The switch includes: a packet processing unit that processes a received packet by using control information received from a preset control device control device; a communication unit that transmits and receives the control information to and from the control device; and a control unit that controls order of control information to be transmitted and received by the communication unit.

## Description

### Technical Field

### Description of the Related Art

The present invention is based on Japanese Patent Application No. 2012-157263 (filed on July 13, 2012), and the entire contents of the application are incorporated herein by reference.

The present invention relates to a switch, a communication system, a switch control method, and a program, and relates particularly to a switch, a communication system, a switch control method, and a program that operate according to control by a predetermined control device.

### Background Art

A technique called OpenFlow has been proposed in the recent years (see Non Patent Literatures NPL 1 and NPL 2). In OpenFlow, communications are regarded as end-to-end flows, and routing control, failure recovery, load distribution, and optimization are performed on a flow basis. The OpenFlow switch specified in Non Patent Literature NPL 2 includes a secure channel for communications with an OpenFlow controller, and operates according to a flow table for which the OpenFlow controller instructs addition or rewriting as needed. The flow table defines, for each flow, a set of match condition (Match Fields) which is compared against a packet header, flow statistical information (Counters), and Instructions in which processing contents are defined (see "4.1 Flow Table" in Non Patent Literature 2).

For example, when receiving a packet, an OpenFlow switch searches a flow table for an entry having a match field that matches the header information of the received packet (see "4.3 Match Fields" in Non Patent Literature NPL 2). When an entry that matches the received packet is found as a result of searching, the OpenFlow switch updates the flow statistical information (Counters), and also executes, on the received packet, the processing contents which is described in the instruction field of the entry (such as packet transmission from a specific port, flooding, or cancellation). When any entry that matches the received packet is not found as a result of searching, the OpenFlow switch transmits, via the secure channel, a request for entry setting to the OpenFlow controller, i.e., a control information transmission request for transmission of control information for processing the received packet (i.e. a Packet-In message). The OpenFlow switch receives a flow entry in which processing contents are defined, and updates the flow table. In this way, the OpenFlow switch performs packet transmission by using an entry stored in the flow table as control information.

### Citation List

### Non Patent Literature

NPL 1: Nick McKeown, and 7 others, "OpenFlow: Enabling Innovation in Campus Networks," [online], [searched on June 21, 2012], Internet <URL: http://www.openflow.org/documents/openflow-wp-latest.pdf>
NPL 2: "OpenFlow Switch Specification" Version 1.1.0 Implemented (Wire Protocol 0x02), [online], [searched on June 21, 2012], Internet <URL: http://www.openflow.org/documents/openflow-spec-v1.1.0.pdf>

### Summary of Invention

### Technical Problem

The following analysis is provided by the present invention. As described above, a switch typified by the OpenFlow switch transmits, when not having control information (corresponding to the above-described "entry") matching with a received packet, a control information transmission request. Moreover, there is also a case in which the controller sets, in advance, an entry to transmit a control information transmission request when receiving a packet having specific characteristics.

For this reason, when a certain switch receives a number of packets, a great number of control information transmission requests may be transmitted to the controller. As a result, loads on the controller increases, which may cause a problem that responses to control information transmission requests from other switches are delayed.

Moreover, a single switch includes many ports. Accordingly, there is a problem that, because of consecutive transmission of control information transmission requests on the basis of the packets received at a certain port, control information transmission requests are delayed when packets are received at other ports.

A fundamental factor of occurrence of these phenomena may be a lack of a control mechanism that determines the order of transmitting messages to be transmitted from the switch to the controller (i.e. control device).

An object of the present invention is to provide a switch, a communication system, a switch control method, and a program that are capable of controlling transmission of control information transmission requests.

### Solution to Problem

According to a first aspect of the present invention, the provided is a switch including: a packet processing unit that processes a received packet by using control information received from a preset control device; a communication unit that transmits and receives the control information to and from the control device; and a control unit that controls order of control information to be transmitted and received by the communication unit.

According to a second aspect of the present invention, the provided is a communication system including: a switch which includes a packet processing unit that processes a received packet by using control information received from a preset control device, a communication unit that transmits and receives the control information to and from the control device, and a control unit that controls order in which the communication unit transmits and receives control information; and a control device that transmits the control information in response to a control information transmission request from the switch.

According to a third aspect of the present invention, the provided is a switch control method in a switch including a packet processing unit that processes a received packet by using control information received from a preset control device, the switch control method including the steps of: generating, when receiving a packet matching with a preset condition, a message of requesting transmission of control information for processing the packet; determining order of transmitting messages to the preset control device according to the predetermined rule; and transmitting the messages to the preset control device in the determined order. This method is related to a specific device called a switch, which processes a received packet on the basis of control information received from a control device.

According to a fourth aspect of the present invention, the provided is a program causing a computer that functions as a switch including a packet processing unit that processes a received packet by using control information received from a preset control device, to perform: a process of generating, when receiving a packet matching with a preset condition, a message of requesting transmission of control information for processing the packet; a process of determining order of transmitting messages to the preset control device according to the preset rule; and a process of transmitting the messages to the preset control device in the determined order. In addition, this program can be stored in a computer-readable (non-transient) storage medium. In other words, the present invention can be implemented as a computer program product.

### Advantageous Effects of Invention

According to the present invention, it is possible to control transmission of control information transmission requests from a switch to a control device.

### Brief Description of Drawings

[Fig. 1] Fig. 1 is a diagram illustrating a structure of an exemplary embodiment of the present invention.
[Fig. 2] Fig. 2 is a diagram illustrating a structure of a first exemplary embodiment of the present invention.
[Fig. 3] Fig. 3 is an example of a table for determining a destination of a control information transmission request.
[Fig. 4] Fig. 4 is a flowchart presenting an operation of a switch according to the first exemplary embodiment of the present invention (at the time of receiving a packet).
[Fig. 5] Fig. 5 is a flowchart presenting an operation of the switch according to the first exemplary embodiment of the present invention (transmission of a Packet-In message).
[Fig. 6] Fig. 6 is a diagram illustrating a structure according to a second exemplary embodiment of the present invention.
[Fig. 7] Fig. 7 is a diagram illustrating a structure according to a third exemplary embodiment of the present invention.
[Fig. 8] Fig. 8 is a diagram illustrating a structure according to a fourth exemplary embodiment of the present invention.
[Fig. 9] Fig. 9 is a diagram illustrating a structure according to a fifth exemplary embodiment of the present invention.

### Description of Embodiments

First, the overview of an exemplary embodiment of the present invention will be described with reference to the drawings. Note that reference numerals for drawing, which are assigned in the overview, are of numerals assigned to individual components merely for convenience to aid understanding, and are not intended to limit the present invention to the modes illustrated in the drawings.

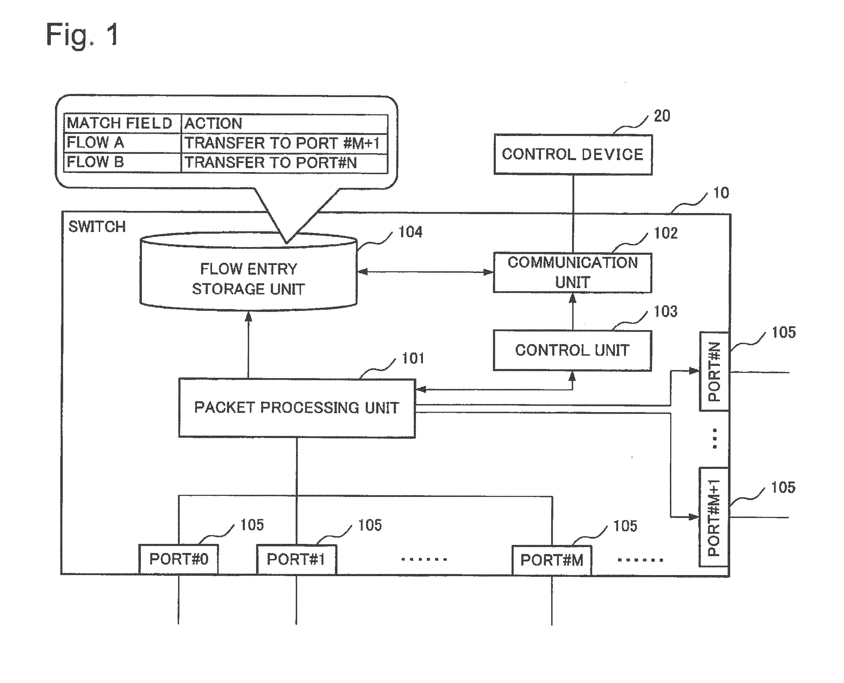

In an exemplary embodiment of the present invention, the invention is able to be implemented, as illustrated in Fig. 1, by a structure including a switch (a switch 10 in Fig. 1) and a control device (a control device 20 in Fig. 1), the switch including: a packet processing unit (a packet processing unit 101 in Fig. 1) that processes received packets by using control information (e.g., control information indicating that a packet belonging to a flow A is to be transferred to a port #M+1) received from the control device 20; a communication unit (a communication unit 102 in Fig. 1) that transmits and receives the control information to and from the control device (the control device 20 in Fig. 1) when a packet matching with a certain condition (such as an occurrence of a new flow) is received; and a control unit (a control unit 103 in Fig. 1) that controls order in which the communication unit transmits and receives the control information. Note that, although the control information is stored in a flow entry storage unit 104 in the example in Fig. 1, the control information may be stored in the packet processing unit 101, instead.

More specifically, when a plurality of control information transmission requests exist and have not been transmitted to the control device yet, the switch performs processing of determining a control information transmission request to be transmitted to the control device on the basis of the receiving port of the packet that triggered each of the plurality of control information transmission requests, and the like. For example, the switch prevents consecutive transmission of control information transmission requests based on the packets received at a specific port, prioritizes control information transmission requests that have not been transmitted over a certain period of time, and sets priorities to control information transmission requests on the basis of the receiving ports of the packets that triggered the control information transmission requests.

In this manner, control of the order of transmitting and receiving control information is implemented.

### [First Exemplary Embodiment]

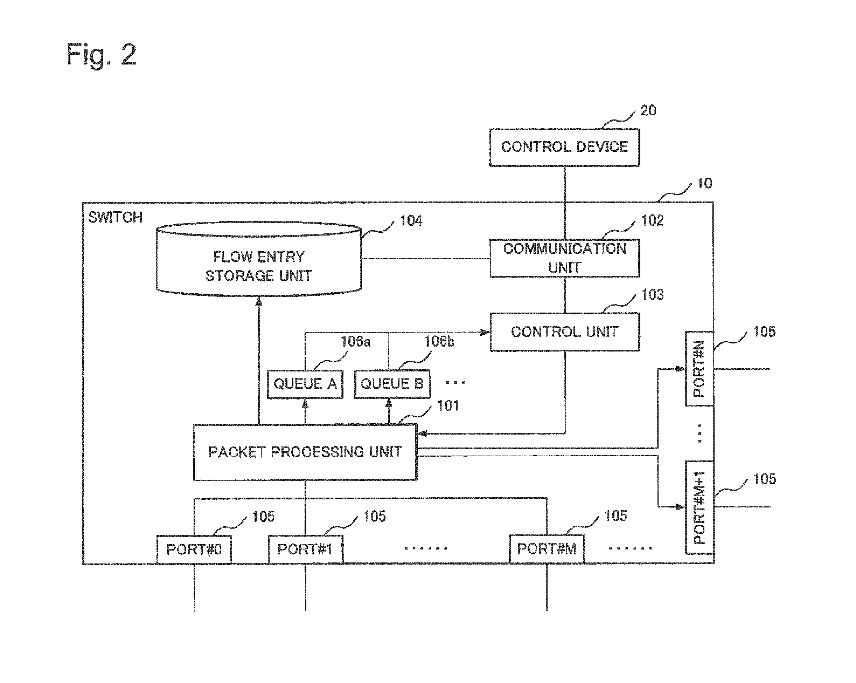

Next, a first exemplary embodiment of the present invention will be described in detail with reference to the drawings. Fig. 2 is a diagram illustrating a structure of a first exemplary embodiment of the present invention. Referring to Fig. 2, a control device 20 and a switch 10 which is controlled by the control device 20 are presented. Note that, although only the single switch 10 is presented in Fig. 2, a plurality of switches 10 which are controlled by the control device 20 may exist.

The switch 10 includes a packet processing unit 101, a communication unit 102, a control unit 103, a flow entry storage unit 104, and N ports 105.

When a packet is input from any of the ports 105, the packet processing unit 101 searches the flow entry storage unit 104 for an entry having a match field which matches with the port number and/or the packet header of the packet. When an entry having the match field which matches with the received packet is found as a result of the searching, the packet processing unit 101 executes the processing contents that are described in the action field of the entry.

By contrast, when no entry having matching field which matches with the received packet is stored in the flow entry storage unit 104, the packet processing unit 101 generates a message of requesting transmission of a flow entry (referred to as a "Packet-In message" below), and then stores the Packet-In message in a queue A 106a or a queue B 106b. The received packet itself or information on the received packet is attached to the Packet-In message.

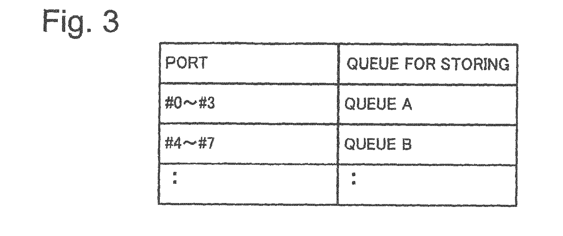

Fig. 3 is an example of a table for determining a queue to which a Packet-In message is stored. In the example in Fig. 3, a Packet-In message generated on the basis of a packet received at any one of ports #0 to #3 is stored in the queue A 106a. Similarly, a Packet-In message generated on the basis of a packet received at any one of ports #4 to #7 is stored in the queue B 106b.

When receiving an instruction to transmit a Packet-In message from the control unit 103, the communication unit 102 transmits the Packet-In message to the control device 20. Moreover, when receiving a message of setting a flow entry from the control device 20 as a response to the Packet-In message (see "5.6 Flow Table Modification Messages" in Non Patent Literature NPL 2), the communication unit 102 registers the flow entry in the flow entry storage unit 104.

The control unit 103 performs operation of extracting the Packet-In message from the queue A 106a or the queue B 106b, and then transmitting the Packet-In message to the communication unit 102. Specific examples of a method of extracting a Packet-In message are as follows.

### [1. Round-robin Method]

(1) Process (transmit to the control device 20) p Packet-In messages in the queue A 106a (where p is a preset number).
(2) Then, process (transmit to the control device 20) q Packet-In messages in the queue B 106b (where q is a preset number).
(3) When there are three queues or more, similarly perform processing of Packet-In messages in each of the queues to the last queue, and then return to the processing (1) for the queue A.

Note that, p and q may be the same value, and it is possible to assign priorities to the queues by setting p and q at different values (the larger the value is, the higher priority is assigned to the concerning queue).

### [2. Polishing Method]

(0) Prepare, for each queue, a counter for storing the number of Packet-In messages that have been processed. This counter is reset every certain time period (e.g., every second).
(1) Every time a Packet-In message is processed, increment the counter of the corresponding queue by 1.
(2) When the counter indicates a value larger than or equal to a preset threshold value (guaranteed value), stop the processing for the concerning queue. In addition, the Packet-In messages stored in the queue at this point may be discarded, as needed. Since the counter is reset every certain time period, performing the processing on concerning Packet-In messages is enabled again after a while.

Note that the threshold values used in the above-described determination (2) may be the same for all the queues, or may vary according to contract plans for users of terminals connected to the ports respectively, the total numbers of terminals connected to the ports associated with the queues, or the like.

### [3. Others]

Naturally, it is possible to employ one of other various methods such as the priority scheduling method in which priorities are set to the queues in advance and the Packet-In messages are extracted on the basis of the priorities. Alternatively, the control device 20 may switch the above-described methods, or update the threshold values used in the above-described methods, according to a situation of a load on the control device 20 itself or a network.

The flow entry storage unit 104 stores the flow entry generated by the control device 20.

Moreover, the switch 10 in Fig. 2 includes the N ports 105. In the example in Fig. 2, M+1 receiving ports and (N-M+1) transmitting ports are presented for the purpose of easy understanding of the operation of the switch. However, the numbers of these ports can be arbitrary. It is also possible that a port is used for both reception and transmission.

Each of the queue A 106a and the queue B 106b is implemented to be capable of storing a preset number of Packet-In messages. Alternatively, instead of such queues, it is possible to use a list, a table, or the like which are implemented so that a preset number of Packet-In messages are associated with receiving port information and priority information and are stored therein, and a specific Packet-In message is able to be extracted therefrom.

Note that each of the units (processing means) of the switch 10 presented in Fig. 2 is able to be implemented by a computer program that causes a computer forming the switch 10 to execute the above-described processing by using the hardware of the computer.

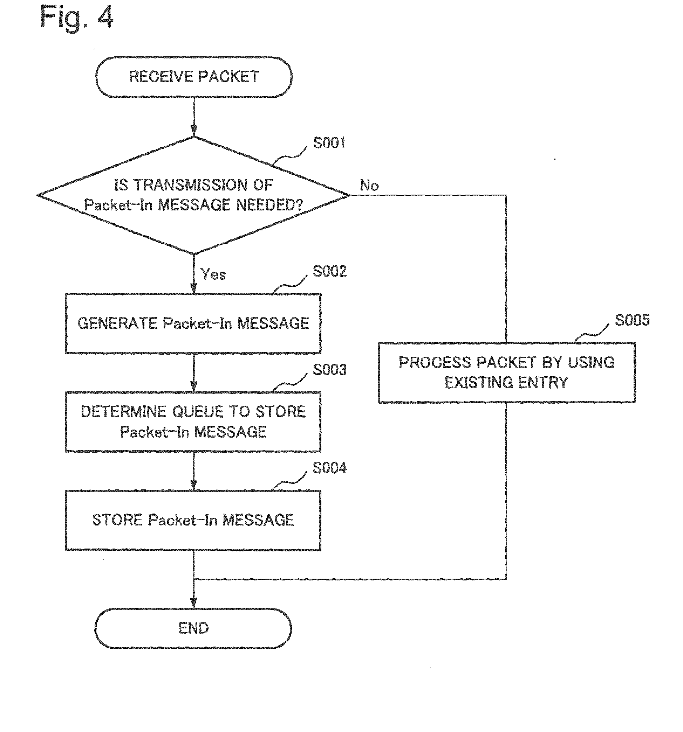

Next, operation according to the exemplary embodiment will be described in detail with reference to the drawings. Fig. 4 is a flowchart presenting operation of the switch according to the first exemplary embodiment of the present invention (at the time of receiving a packet). Referring to Fig. 4, first, when a packet is input from any of the ports 105, the switch 10 searches the flow entry storage unit 104 for an entry having matching field which matches with the received packet. Determination of whether or not transmission of a Packet-In message is needed is made according to the result of this search. In other words, the search for a flow entry is the same as making determination of whether or not transmission of a Packet-In message is needed (Step S001).

When it is determined, as a result of the search for a flow entry, that transmission of a Packet-In message is not needed (No in Step S001), i.e., for example, when an entry which matches with the received packet is found as a result of the search for a flow entry (No in Step S001), the switch 10 processes the received packet according to the flow entry (Step S005).

By contrast, when it is determined that transmission of a Packet-In message is needed (Yes in Step S001), for example, when no entry which matches with the received packet is found, or when the entry which matches with the received packet instructs to transmit a Packet-In message to the control device 20, the switch 10 generates a Packet-In message (Step S002).

Then, the switch 10 determines a queue in which the Packet-In message is to be stored with reference to the table presented in Fig. 3 and the like (Step S003).

Thereafter, the switch 10 stores the Packet-In message in the determined queue (Step S004).

By the above-described operation, generation of a Packet-In message triggered by a receipt of a packet and storing of the Packet-In message in an appropriate queue are completed.

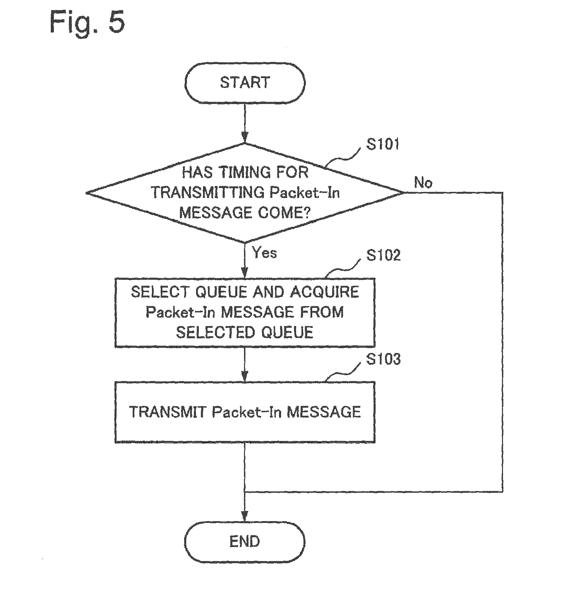

Fig. 5 is a flowchart presenting operation of the switch according to the first exemplary embodiment of the present invention (transmission of a Packet-In message). Referring to Fig. 5, first, at certain timing for transmitting a Packet-In message, e.g., when completing transmission of the Packet-In message selected in previous cycle (Step S101), the switch 10 selects a queue by using a preset method such as the round-robin method or the polishing method as described above, and extracts a Packet-In message therefrom (Step S102). When only a single Packet-In message is stored, selection of a queue in Step S102 may be omitted.

Then, the switch 10 transmits the extracted Packet-In message to the control device 20 (Step S103).

As described above, instead of simply transmitting Packet-In messages in the order of generation, the switch 10 stores a Packet-In message in the queue according to the port at which the packet triggering generation of the Packet-In message is received, and then performs selective transmission of a Packet-In message. Consequently, even when packets are consecutively input from a specific port, it is possible to transmit, without prioritizing Packet-In messages for processing the packets, a Packet-In message based on a packet input from a different port, by breaking into the Packet-In messages with the Packet-In message.

### [Second Exemplary Embodiment]

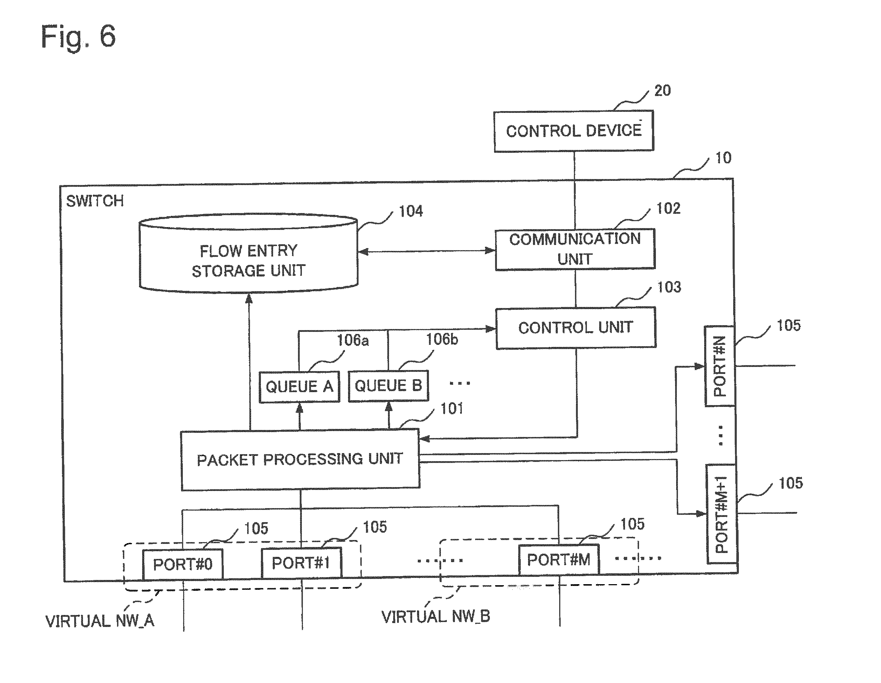

Next, a second exemplary embodiment of the present invention will be described in detail with reference to the drawings. Fig. 6 is a diagram illustrating a structure of the second exemplary embodiment of the present invention. The respect different from the first exemplary embodiment illustrated in Fig. 2 is that each of the ports 105 is associated with a virtual network. Since the other respects are the same as those in the first exemplary embodiment, description will be given below mainly of the different respect.

In this exemplary embodiment, for example, a Packet-In message for processing a packet received at a port associated with a virtual network A (i.e. virtual NW_A) is stored in the queue A 106a. Similarly, a Packet-In message for processing a packet received at a port associated with a virtual network B (i.e. virtual NW_B) is stored in the queue B 106b.

The switch 10 selects a queue by using a preset method such as the round-robin method or the polishing method as described above, and then transmits an appropriate Packet-In message.

As described above, according to this exemplary embodiment, it is possible to control transmission of a Packet-In message separately for each virtual network. It is possible to assign priorities to virtual networks by setting the numbers p and q of messages to process in the round-robin method, or the threshold values (guaranteed values) for counter comparison in the polishing method, at different values, as described also in the above first exemplary embodiment.

### [Third Exemplary Embodiment]

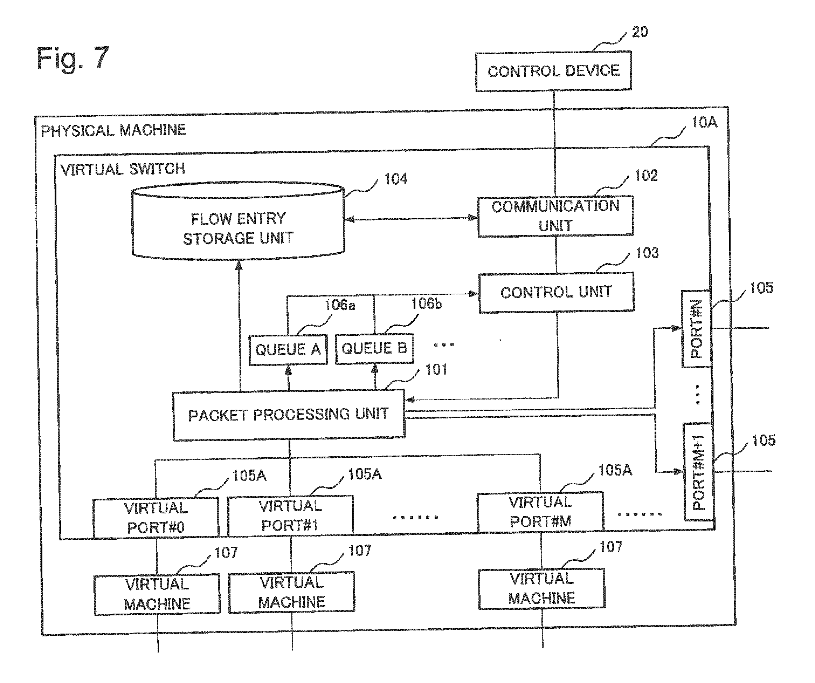

Next, a third exemplary embodiment of the present invention will be described in detail with reference to the drawings. Fig. 7 is a diagram illustrating a structure of the third exemplary embodiment of the present invention. The respect different from the first exemplary embodiment illustrated in Fig. 2 is that the switch 10 is implemented as a virtual switch 10A that operates on a physical machine, and performs switching of packets transmitted from virtual machines 107 that also operate on the physical machine. Since the other respects are the same as those in the first and second exemplary embodiments, description will be given below mainly of the different respect.

In this exemplary embodiment, for example, a Packet-In message for processing a packet received at a virtual port 105A which is associated with one of the virtual machines 107 is stored in a queue A 106a. Similarly, a Packet-In message for processing a packet received at a virtual port 105A associated with a different one of the virtual machines 107 is stored in a queue B 106b.

The virtual switch 10A selects a queue by using a preset method such as the round-robin method or the polishing method as described above, and then transmits an appropriate Packet-In message.

As described above, according to this exemplary embodiment, it is possible to control transmission of a Packet-In message separately for each virtual machine. It is possible to assign priorities to virtual machines by setting the numbers p and q of messages to process in the round-robin method, or the threshold values (guaranteed values) for counter comparison in the polishing method, at different values, as described also in the above-described first and second exemplary embodiments.

### [Fourth Exemplary Embodiment]

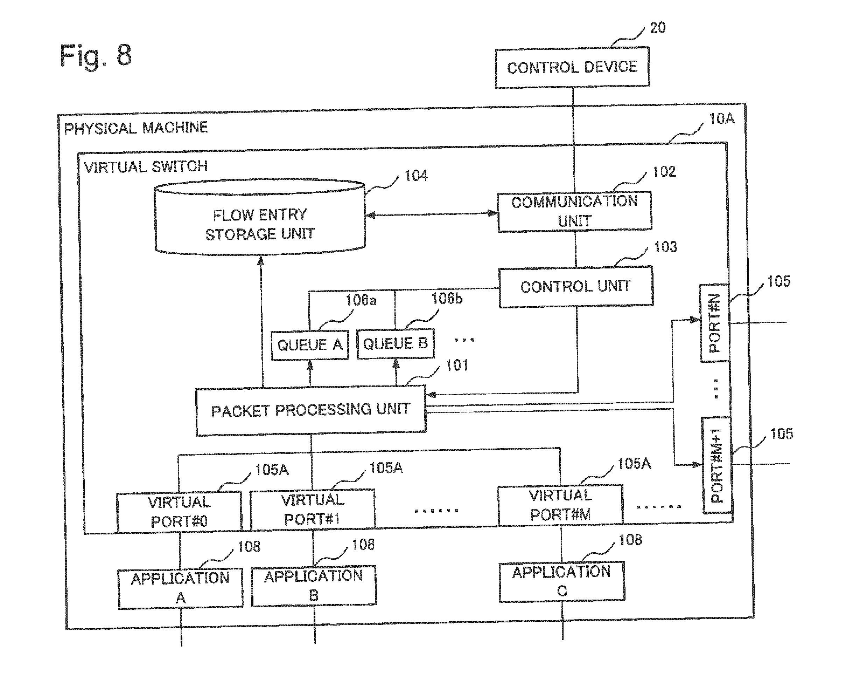

Next, a fourth exemplary embodiment of the present invention will be described in detail with reference to the drawings. Fig. 8 is a diagram illustrating a structure of the fourth exemplary embodiment of the present invention. The respect different from the first exemplary embodiment illustrated in Fig. 2 is that the switch 10 is implemented as a virtual switch 10A that operates on a physical machine, and performs switching of packets transmitted from applications (programs) 108 that also operate on the physical machine. Since the other respects are the same as those in the first to third exemplary embodiments, description will be given below mainly of the different respect.

In this exemplary embodiment, for example, a Packet-In message for processing a packet received at a virtual port 105A, to which packets from one of the applications (programs) 108 is input, is stored in a queue A 106a. Similarly, a Packet-In message for processing a packet received at a virtual port 105A, to which packets from a different one of the applications (programs) 108 is input, is stored in a queue B 106b.

The virtual switch 10A selects a queue by using a preset method such as the round-robin method or the polishing method as described above, and then transmits an appropriate Packet-In message.

As described above, according to this exemplary embodiment, it is possible to control transmission of a Packet-In message for each application (program). It is possible to assign priorities to applications (programs) by setting the numbers p and q of messages to process in the round-robin method, or the threshold values (guaranteed values) for counter comparison in the polishing method, at different values, as described also in the above first to third exemplary embodiments.

### [Fifth Exemplary Embodiment]

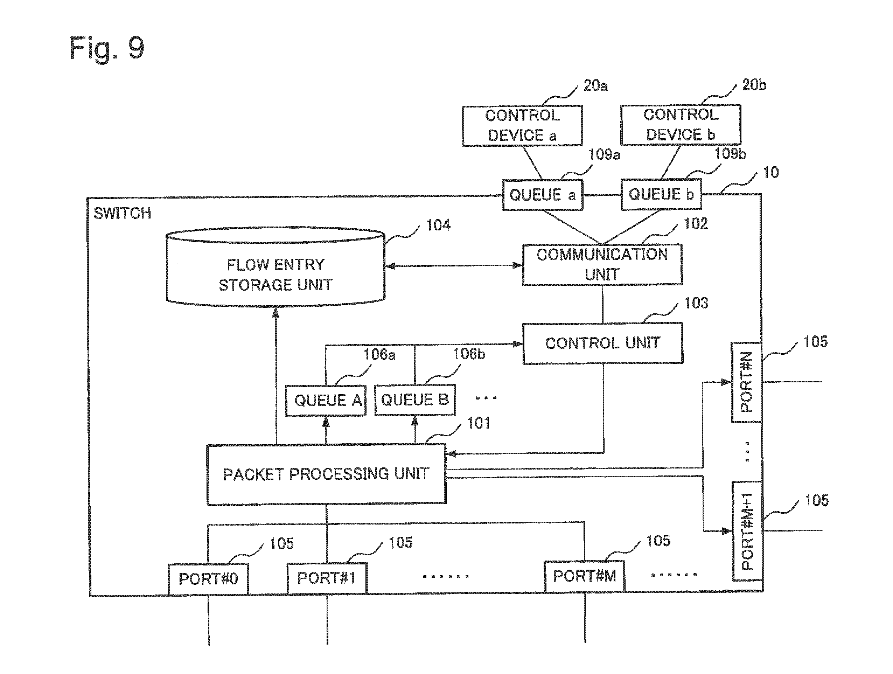

The following is a description of a fifth exemplary embodiment of the present invention, which includes addition of order control of accepting (processing) control information transmitted from control devices. As illustrated in Fig. 9, a switch 10 of the fifth exemplary embodiment of the present invention is different from the first to fourth exemplary embodiments in that the switch 10 of this exemplary embodiment is connected to a plurality of control devices 20a and 20b, and includes a queue a 109a and a queue b 109b which store control messages from the control devices 20a and 20b, respectively. In the following, the respect different from the first exemplary embodiment will be described mainly.

The queue a 109a is used to store control messages, e.g., flow-entry setting messages based on an OpenFlow protocol, which are received from the control device 20a. Similarly, the queue b 109b stores the control messages which are received from the control device 20b.

A communication unit 102 sequentially extracts the control messages of OpenFlow from the queue a 109a and the queue b 109b, interprets the control messages, and then stores the result in the flow entry storage unit 104. As a method of selecting a queue from which control messages are to be extracted, the round-robin method, the polishing method, or the like is able to be used similarly in the case where the control unit 103 extracts messages from the queues 106a and 106b.

In this exemplary embodiment, it is possible to extract control information from a plurality of control devices according to a preset rule, and then stores the control information in the flow entry storage unit 104. This consequently makes it possible to prevent the occurrence of a situation where only a specific device transmits Packet-In messages to the switch 10 and receives results while other control devices are not able to receive responses to their Packet-In messages.

In the description of the above-described exemplary embodiments, the switch 10 is connected to two control devices and includes two queues which are associated with the control devices, respectively. However, the number of control devices that is connected to the switch 10 may be arbitrary. In addition, the control devices 20a and 20b may be associated respectively to the queues 109a and 109b one by one, or messages from a plurality of control devices may be stored in a single queue.

Moreover, the communication unit 102 may store the flow entries in the flow entry storage unit 104 and may also transmit the control messages to the packet processing unit 101.

Further, in the description of the above-described exemplary embodiments, the switch 10 includes the queue A 106a and the queue B 106b and also controls the order of transmitting Packet-In messages. However, it is also possible to adopt a configuration in which the control of the order of transmitting Packet-In messages is omitted. In this case, Packet-In messages are transmitted to the control devices 20a and 20b in the order of receiving concerning packets as new packets, and the switch 10 performs the control of the order of accepting (processing) responses to the Packet-In messages.

The exemplary embodiments of the present invention have been described above. However, the present invention is not limited to the above-described exemplary embodiments, and further modifications, substitutions, and adjustments can be added to the exemplary embodiments within the range not departing from the fundamental technical ideas of the present invention. For example, the network configurations, the numbers of ports and queues employed in the above-described exemplary embodiments are merely examples, and those numbers are not limited.

In the exemplary embodiments described above, it has been described that the control unit 103 performs storing in a queue on the basis of the receiving port of the packet that triggered generation of a Packet-In message. However, it is also possible to use header information of the packet instead of the receiving port. This enables such control that a higher or lower priority would be assigned to a Packet-In message for processing a packet to a specific user or a specific destination.

Note that the disclosures of above-mentioned Non Patent Literatures are incorporated herein by reference. Changes and adjustments can be made to the exemplary embodiments and examples within the scope of the entire disclosure (including the scope of claims) of the present invention on the basis of the fundamental technical ideas thereof. In addition, a variety of combinations or selections of various disclosed elements (including the elements in the claims, the elements in the exemplary embodiments and examples, the elements in the drawings, and the like) are possible within the scope of claims of the present invention. That is, needless to say, the present invention includes various alternations and modifications that can be made by those skilled in the art according to the entire disclosure including the scope of claims and the technical ideas.

### Reference signs List

- 10: Switch
- 10A: Virtual switch
- 20, 20a, 20b: Control device
- 101: Packet processing unit
- 102: Communication unit
- 103: Control unit
- 104: Flow entry storage unit
- 105: Port
- 105A: Virtual port
- 106a, 106b, 109a, 109b: Queue
- 107: Virtual machine
- 108: Application (Program)

## Claims

1. A switch comprising:
a packet processing unit that processes a received packet by using control information received from a preset control device;
a communication unit that transmits and receives the control information to and from the control device; and
a control unit that controls order of control information to be transmitted and received by the communication unit.

2. The switch according to claim 1, wherein,
when receiving a packet matching with a preset condition, the communication unit requests the preset control device to transmit control information for processing the packet, and
the control unit controls order of control information transmission requests by the communication unit, on a basis of a receiving port of the packet that triggered the control information transmission request.

3. The switch according to claim 2, further comprising:
a message storing unit that stores a message of requesting transmission of the control information, wherein
the control unit controls operation of the communication unit by controlling order of storing the message in the message storing unit or order of extracting the message from the message storing unit.

4. The switch according to claim 3, wherein
a plurality of message storing units are provided, the plurality of message storing units being associated with ports, and
the control unit stores a message of requesting transmission of the control information in a message storing unit that is associated with a port at which a packet is received, and controls operation of the communication unit by extracting messages from the plurality of message storing units according to a preset rule.

5. The switch according to claim 3, wherein
a plurality of message storing units are provided, the plurality of message storing units being associated with virtual ports connected to virtual machines,
the control unit stores a message of requesting transmission of control information in a message storing unit that is associated with a virtual port at which a packet from a virtual machine is received, and
the control unit controls operation of the communication unit by controlling order of extracting messages from the plurality of message storing units.

6. The switch according to claim 4 or 5, wherein
priorities are assigned to the plurality of message storing units, and
the control unit performs extracting a message by referring to the priorities of the plurality of message storing units.

7. The switch according to any one of claims 1 to 6, wherein
the control unit controls operation of the communication unit on a basis of header information of the packet that triggered the control information transmission request, instead of the receiving port.

8. The switch according to any one of claims 1 to 6, wherein
the control unit controls operation of the communication unit further on a basis of header information of the packet that triggered the control information transmission request.

9. The switch according to any one of claims 1 to 8, further comprising:
a flow entry storage unit that stores the control information; and
a plurality of message storing units that stores a message from the control device, wherein
the communication unit controls order of extracting a message from the plurality of control information storing units, performs an interpretation of the message, and stores a result thereof in the flow entry storage unit.

10. A communication system comprising:
a switch which includes
a packet processing unit that processes a received packet by using control information received from a preset control device,
a communication unit that transmits and receives the control information to and from the control device, and
a control unit that controls order in which the communication unit transmits and receives control information; and
a control device that transmits the control information in response to a control information transmission request from the switch.

11. A switch control method in a switch including a packet processing unit that processes a received packet by using control information received from a preset control device, the switch control method comprising:
a step of generating, when receiving a packet matching with a preset condition, a message of requesting transmission of control information for processing the packet;
a step of determining order of transmitting messages to the preset control device according to the preset rule; and
a step of transmitting the messages to the preset control device in the determined order.

12. A program causing a computer that functions as a switch switch including a packet processing unit that processes a received packet by using control information received from a preset control device, to perform:
a process of generating, when receiving a packet matching with a preset condition, a message of requesting transmission of control information for processing the packet;
a process of determining order of transmitting messages to the preset control device according to the preset rule; and
a process of transmitting the messages to the preset control device in the determined order.

13. A recording medium storing a program causing a computer that functions as a switch switch including a packet processing unit that processes a received packet by using control information received from a preset control device, to perform:
a process of generating, when receiving a packet matching with a preset condition, a message of requesting transmission of control information for processing the packet;
a process of determining order of transmitting messages to the preset control device according to the preset rule; and
a process of transmitting the messages to the preset control device in the determined order.
